# EUROPÄISCHE PATENTSCHRIFT

(11) **EP 0 749 880 B1**
(45) Veröffentlichungstag und Bekanntmachung des Hinweises auf die Patenterteilung: **19.05.1999**
(21) Anmeldenummer: 96105758.5
(22) Anmeldetag: 12.04.1996
(51) Int. Cl.: B61D 27/00

(54) **Belüftungsvorrichtung mit Druckschutz-Ventilator**
Ventilation device with a fan with pressure protection
Dispositif d'aération avec un aérateur avec protection contre la surpression

(30) Priorität: 19.06.1995 DE 19522099
(43) Veröffentlichungstag der Anmeldung: 27.12.1996
(73) Patentinhaber: Lex, Ernst, 9571 Sirnitz (AT)
(72) Erfinder: Lex, Ernst, 9571 Sirnitz (AT)
(74) Vertreter: Böhme, Volker, Dipl.-Ing.

(56) Entgegenhaltungen:
- EP-A- 0 315 108
- DE-A- 4 320 394
- DE-B- 1 064 545

## Beschreibung

Die Erfindung betrifft eine Belüftungsvorrichtung mit Druckschutz bei der ein erster Ventilator und ein zweiter Ventilator vorgesehen sind, die jeweils ein Ventilatorgehäuse mit einer Ansaugöffnung und einer Ausblasöffnung aufweisen, und bei der ein Klimagerät und eine Umluftleitung vorgesehen sind.

Die mit dem Druckschutz-Ventilator ausgestattete Belüftungsvorrichtung ist in der Regel bei schnellfahrenden Schienenfahrzeugen vorgesehen. Bei diesen treten bei Begegnungswerkehr und bei Tunneleinfahrten an der Außenkontur extrem hohe Druckanstiege oder auch Unterdrucke auf, die, wenn nicht eine Druckschutzeinrichtung vorgesehen ist, durch die Außenöffnungen für die Belüftungsvorrichtung in das Fahrzeuginnere eindringen und dort zu erheblichen Komfortbeeinträchtigungen der Passagiere führen. Ein Druckschutz-Ventilator ist bekannt (DE-U-94 06 523).

Es ist eine Belüftungsvorrichtung denkbar, bei der bei Normalbetrieb ohne Druckstöße Außenluft über den als Lüfter ausgebildeten ersten Ventilator angesaugt wird, der im Klimagerät angeordnet ist, ein als zweistufiger Ventilator ausgebildeter Druckschutz-Ventilator in einem Bypass zur Zuleitung zu dem Lüfter angeordnet ist und stillgesetzt ist und ein dritter Ventilator läuft, um dem Klimagerät Umluft zuzuführen. In Streckenbereichen, in denen die Gefahr von Druckstößen besteht, wird der Druckschutz-Ventilator, der als zweistufiger Ventilator ausgebildet ist, zugeschaltet. Bei einer solchen Belüftungsvorrichtung ist der Druckschutz-Ventilator als dritter Ventilator aufwendig und eine zusätzliche Gewichtsbelastung. Bei Druckschutzbetrieb verursacht der zusätzlich zugeschaltete Druckschutz-Ventilator zusätzlichen Energieverbrauch.

Eine Aufgabe der Erfindung ist es daher, eine Belüftungsvorrichtung der eingangs genannten Art zu schaffen, bei der die Zufuhr von Außenluft und Umluft zum Klimagerät bei Normalbetrieb und Druckschutzbetrieb mit einem verringerten Ventilatoraufwand verbunden ist. Die erfindungsgemäße Belüftungsvorrichtung ist, diese Aufgabe lösend, dadurch gekennzeichnet, daß eine Außenluftkammer über eine steuerbare Normalklappe mit einer Mischkammer verbindbar ist und über eine steuerbare Zwischenklappe mit einer Umluftkammer verbindbar ist, die ihrerseits über eine Umluftöffnung mit der Umluftleitung verbindbar ist, daß der erste Ventilator in der Außenluftkammer angeordnet ist und dessen Ansaugöffnung an eine Außenluftöffnung der Außenluftkammer angeschlossen ist, daß der zweite Ventilator in der Umluftkammer angeordnet ist und dessen Ausblasöffnung an eine Auslaßöffnung der Umluftkammer in die Mischkammer angeschlossen ist, und daß die Mischkammer zum Klimagerät hin ventilatorfrei offen ist, wodurch der zweite Ventilator mit dem ersten Ventilator zur Bildung einer Ventilatoreinheit in Reihe schaltbar ist und sich dadurch die für den Druckschutz erforderfiche Steilheit der Druck-Volumen-Kennlinien der Ventilatoreinheit ergibt.

Bei der erfindungsgemäßen Belüftungsvorrichtung sind nur zwei Ventilatoren vorgesehen, weshalb der Ventilatoraufwand verringert ist. Bei Druckschutzbetrieb der Belüftungsvorrichtung arbeiten die beiden Ventilatoren in Reihe, wobei der eine Ventilator nur Außenluft und der andere Ventilator Außenluft und ggf. Umluft fördert. Durch die Anordnung der Ventilatoren in den Kammern, die im wesentlichen druckdicht sind, und durch die schaltbaren Klappen ist eine vereinfachte Umstellbarkeit von Normalbetrieb auf Druckschutzbetrieb und umgekehrt gegeben. Durch das in Reihe Schalten der beiden Ventilatoren ergibt sich die für den Druckschutz erforderliche Steilheit der Kennlinien der Ventilatoreinheit, ohne daß eine zweistufige Ausbildung eines Ventilators nötig ist.

Es kann die vom ersten Ventilator angesaugte Außenluftmenge geregelt werden. Dies ist besonders dann vorteilhaft, wenn bei geringer Fahrzeugbesetzung oder extremen Außentemperaturen die Außenluftmenge zwecks Energieeinsparung vermindert werden soll.

Die Umluftöffnung ist unter Umständen beständig offen. Besonders zweckmäßig und vorteilhaft ist es jedoch, wenn die Umluftöffnung mit einer steuerbaren Umluftklappe versehen ist. Nunmehr läßt sich die Umluftöffnung, falls es zweckmäßig ist, schließen, z.B. für den Druckschutzbetrieb.

In dem Klimagerät wird die Luft erhitzt oder gekühlt. Die Ventilatoren sind jeweils Radialventilatoren bzw. Zentrifugalgebläse, denen die Luft innen axial zuströmt und außen tangential entweicht. Die Kennlinie ist eine steile Druck-Volumen-Kennlinie, gemäß der eine erhebliche Druckänderung nur eine geringe Änderung des geförderten Luftvolumens verursacht.

Durch die Außenkammer wird jede Verbindungseinrichtung angegeben, die von der Ausblasöffnung des ersten Ventilators sowohl eine Verbindung über die Normalklappe in die Mischkammer als auch über die Zwischenklappe zur Ansaugöffnung des zweiten Ventilators schafft. Durch die Umluftkammer wird jede Verbindungseinrichtung angegeben, die sowohl von der der Ausblasöffnung des ersten Ventilators zugeordneten Zwischenklappe her als auch von der Umluftöffnung her eine Verbindung zur Ansaugöffnung des zweiten Ventilators schafft. Mit steuerbarer Klappe ist jede die Durchtrittsmenge an Luft verstellende Einrichtung, z.B. auch eine Ventil oder ein Schieber, gemeint.

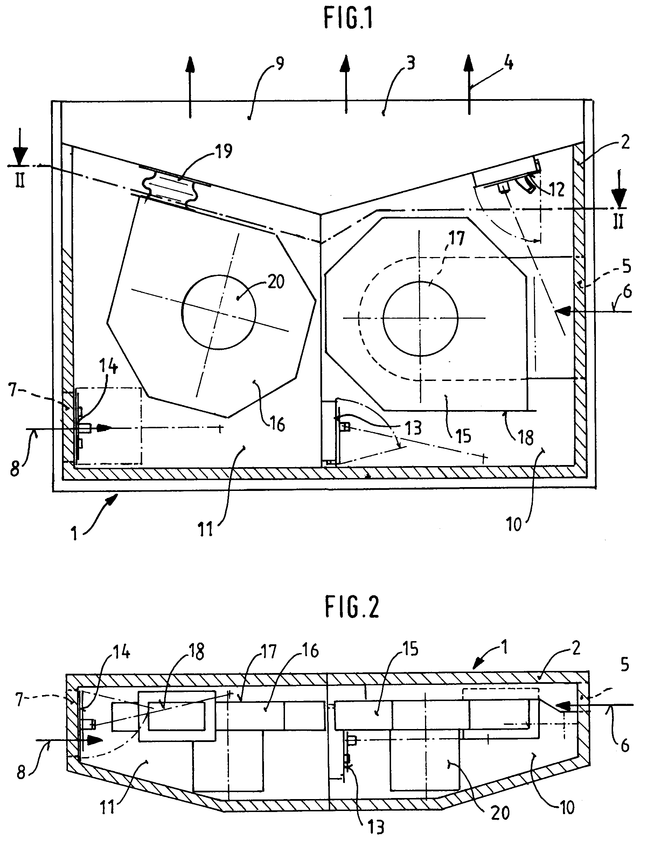

In der Zeichnung ist eine bevorzugte Ausführungsform der Erfindung dargestellt und zeigt
- Fig. 1: eine Belüftungsvorrichtung mit Druckschutz, mit Aufbruch, und
- Fig. 2: einen Schnitt gemäß Linie II-II in Fig. 1.

Die Belüftungsvorrichtung gemäß Zeichnung umfaßt eine gesteuerte Ventilatoreinheit 1, die ein Außengehäuse 2 aufweist, das über eine Öffnung 3 zu einem nicht gezeigten Klimagerät hin offen ist, zu dem Luft gemäß Pfeilen 4 strömt. In die Ventilatoreinheit 1 wird durch eine Außenluftöffnung 5 gemäß einem Pfeil 6 Außenluft angesaugt und durch eine Umluftöffnung 7 gemäß einem Pfeil 8 Umluft aus einem Fahrzeuginneren angesaugt, in das Luft von dem nicht gezeigten Klimagerät strömt. Das Außengehäuse 2 ist unterteilt in eine Mischkammer 9, welche die Öffnung 3 aufweist, in eine Außenluftkammer 10, welche die Außenluftöffnung 5 aufweist, und in eine Umluftkammer 11, welche die Umluftöffnung 7 aufweist, an die eine nicht gezeigte Umluftleitung anschließt. Die Außenluftkammer 10 ist mit der Mischkammer 9 über eine steuerbare Normalklappe 12 verbindbar. Die Außenluftkammer 10 und die Umluftkammer 11 sind miteinander über eine steuerbare Zwischenklappe 13 verbindbar. Die Umluftöffnung 7 ist mit einer steuerbaren Umluftklappe 14 versehen.

In der Außenluftkammer 10 ist ein erster Ventilator 15 angeordnet und in der Umluftkammer 11 ist ein zweiter Ventilator 16 angeordnet. Beide Ventilatoren 15, 16 weisen jeweils ein Ventilatorgehäuse mit einer radial innen angeordneten Ansaugöffnung 17 und einer radial außen angeordneten Ausblasöffnung 18 auf. Die Ansaugöffnung 17 des ersten Ventilators 15 ist an die Außenluftöffnung 5 angeschlossen und die Ausblasöffnung 18 des ersten Ventilators 15 liegt frei in der Außenluftkammer 10. Die Ansaugöffnung 17 des zweiten Ventilators 16 liegt frei in der Umluftkammer 11 und die Ausblasöffnung 18 des zweiten Ventilators 16 ist an eine Auslaßöffnung 19 der Umluftkammer in die Mischkammer 9 angeschlossen. Jeder der beiden Ventilatoren 15, 16 ist mit einem Motor 20 versehen. Es sind drei verschiedene Betriebsarten einstellbar.

Eine erste Betriebsart ist als Normalbetrieb bei mittlerer bis hoher Heiz- oder Kühllast des Klimageräts vorgesehen. Es ist die Normalklappe 12 geöffnet, die Zwischenklappe 13 geschlossen und die Umluftklappe 14 geöffnet. Der erste Ventilator 15 fördert Außenluft, z.B. 1400 m³/h über die Normalklappe 12 in die Mischkammer 9 und der zweite Ventilator 16 fördert Umluft, z.B. 1400 m³/h, in die Mischkammer.

Eine zweite Betriebsart ist als Normalbetrieb bei geringer Heiz- oder Kühllast des Klimageräts vorgesehen. Es ist die Normalklappe 12 geöffnet und sind die Zwischenklappe 13 und die Umluftklappe 14 geschlossen. Der erste Ventilator 15 fördert Außenluft, z.B. 1400 m³/h, in die Mischkammer 9 und der zweite Ventilator 16 ist abgeschaltet.

Eine Betriebsart ist als Druckschutzbetrieb unabhängig von der Heiz- oder Kühllast des Klimageräts vorgesehen. Es ist die Normalklappe 12 geschlossen, die Zwischenklappe 13 geöffnet und die Umluftklappe 14 geschlossen. Der erste Ventilator 15 fördert Außenluft, z.B. 1400 m³/h, über die Zwischenklappe 13 in die Umluftkammer 11 und der zweite Ventilator 16 bläst diese Luft, z.B. 1400 m³/h, in die Mischkammer 9.

## Patentansprüche

1. Belüftungsvorrichtung mit Druckschutz,
bei der ein erster Ventilator (15) und ein zweiter Ventilator (16) vorgesehen sind, die jeweils ein Ventilatorgehäuse mit einer Ansaugöffnung (17) und einer Ausblasöffnung (18) aufweisen, und bei der ein Klimagerät und eine Umluftleitung vorgesehen sind,
dadurch gekennzeichnet,
daß eine Außenluftkammer (10) über eine steuerbare Normalklappe (12) mit einer Mischkammer (9) verbindbar ist und über eine steuerbare Zwischenklappe (13) mit einer Umluftkammer (11) verbindbar ist, die ihrerseits über eine Umluftöffnung (7) mit der Umluftleitung verbindbar ist,
daß der erste Ventilator (15) in der Außenluftkammer (10) angeordnet ist und dessen Ansaugöffnung (17) an eine Außenluftöffnung (5) der Außenluftkammer (10) angeschlossen ist,
daß der zweite Ventilator (16) in der Umluftkammer (11) angeordnet ist und dessen Ausblasöffnung (18) an eine Auslaßöffnung (19) der Umluftkammer (11) in die Mischkammer (9) angeschlossen ist, und
daß die Mischkammer (9) zum Klimagerät hin ventilatorfrei offen ist,
wodurch der zweite Ventilator (16) mit dem ersten Ventilator (15) zur Bildung einer Ventilatoreinheit in Reihe schaltbar ist und sich dadurch die für den Druckschutz erforderfiche Steilheit der Druck-Volumen-Kennlinien der Ventilatoreinheit ergibt.

2. Belüftungsvorrichtung nach Anspruch 1, dadurch gekennzeichnet, daß die Umluftöffnung (7) mit einer steuerbaren Umluftklappe (14) versehen ist.

## Claims

1. A ventilation device with pressure protection, wherein a first ventilator (15) and a second ventilator (16) are provided which each have a ventilator housing with an intake opening (17) and an exhaust opening (18), and wherein air-conditioning apparatus and a circulating-air line are provided, characterised in that an outside-air chamber (10) is connectable to a mixing chamber (9) via a controllable standard flap (12) and connectable to a circulating-air chamber (11) via a controllable intermediate flap (13), the circulating-air chamber (11) for its part being connectable to the circulating-air line via a circulating-air opening (7), in that the first ventilator (15) is arranged in the outside-air chamber (10) and its intake opening (17) is connected to an outside-air opening (5) of the outside-air chamber (10), in that the second ventilator (16) is arranged in the circulating-air chamber (11) and its exhaust opening (18) is connected to an outlet opening (19) of the circulating-air chamber (11) opening into the mixing chamber (9), and in that the mixing chamber (9) is open in the direction of the air-conditioning apparatus and is ventilator-free, as a result of which the second ventilator (16) is connectable in series to the first ventilator (15) to form a ventilator unit, thereby producing the steepness of the pressure-volume characteristics of the ventilator unit as is necessary for pressure maintenance.

2. A ventilation device according to claim 1, characterised in that the circulating-air opening (7) is provided with a controllable circulating-air flap (14).

## Revendications

1. Dispositif de ventilation présentant une protection contre la surpression, dans lequel sont prévus un premier ventilateur (15) et un second ventilateur (16) qui comprennent chacun un carter de ventilateur avec une ouverture d'aspiration (17) et une ouverture de soufflage (18), et dans lequel sont prévus un appareil de conditionnement d'air et une conduite d'air recyclé, caractérisé en ce qu'une chambre d'air extérieure (10) est susceptible d'être reliée via un clapet normal commandable (12) à une chambre de mélange (9), et via un clapet intermédiaire commandable (13) à une chambre d'air recyclé (11) qui est à son tour susceptible d'être reliée via une ouverture d'air recyclé (7) à la conduite d'air recyclé, en ce que le premier ventilateur (15) est agencé dans la chambre d'air extérieure (10) et son ouverture d'aspiration (17) est reliée à une ouverture d'air extérieure (10) de la chambre d'air extérieure (10), en ce que le second ventilateur (16) est agencé dans la chambre d'air recyclé (11) et son ouverture de soufflage (18) est reliée à une ouverture de sortie (19) de la chambre d'air recyclé (11) dans la chambre de mélange (9), et en ce que la chambre de mélange (9) est ouverte et exempte de ventilateur vers l'appareil de conditionnement d'air, suite à quoi le second ventilateur (16) est commutable en série avec le premier ventilateur (15) pour former une unité de ventilateur, et suite à quoi on obtient pour les courbes caractéristiques pression/volume de l'unité de ventilateur la raideur de pente nécessaire pour la protection à l'encontre de la surpression.

2. Dispositif de ventilation selon la revendication 1, caractérisé en ce que l'ouverture d'air recyclé (7) est pourvue d'un clapet d'air recyclé commandable (14).
